# EUROPEAN PATENT APPLICATION

(11) **EP 1 076 312 A1**
(43) Date of publication of application: **14.02.2001**
(21) Application number: 99306366.8
(22) Date of filing: 12.08.1999
(51) Int. Cl.: G06K 15/02

(54) **Printing method and apparatus**

(71) Applicant: Image Technologies Developments plc, Brentford, Middlesex TW8 0AH (GB)
(72) Inventor: Shaikh, Amed Urooj, Hillingdon, Middlesex UB10 9LP (GB); Forbes, Susan, Farnham, Surrey GU9 8HX (FR)
(74) Representative: Brunner, Michael John

(57) **Abstract**

The present invention provides a method and apparatus for splitting colour and monochrome pages automatically within a single document to print, respectively, to a colour (G) or monochrome (H) printing device depending on the respective colour content of each individual page within the document. This allows the advantage(s) (of either the speed, cost or other benefit) provided by two or more different types of printing device to be utilised effectively.

## Description

The present invention relates to a printing method and apparatus and, more particularly, to a process whereby printing costs of electronic documents which consist of a mix of colour and black & white pages can be minimized.

Colour is used increasingly in documents prepared by word processing software and this has been facilitated by the increased availability of colour printers at reasonable costs. However, black and white printers are generally not only faster, but also less expensive both in initial costs and in regard to consumables such as paper and printing consumables such as ink or toner. Thus, colour printers may often have a higher cost of printing associated with them on a per page printed basis than black and white printers.

For the purposes of this specification, 'black and white' includes a single colour other than black (i.e. monochrome) that can be rendered using an ink or phosphor or other marking medium(s) used by a printer, and 'colour' refers to multiple colours that can be rendered via the inks or marking medium(s) used by a printer. In either case, a screening or 'dithering' process my be used in conjunction with the inks to generate as close an approximation of the required shade as possible.

It is often required to print a document which consists largely of black and white text, but which includes a small number of pages containing colour representations, e.g. photographs or coloured drawings. To print such documents accurately, the colour needs to be reproduced and hence it is conventional to print the document using a colour printing device. However, the results in a significant waste of time and cost since the largely black and white text is unnecessarily printed using the colour printing device which increases the printing cost and reduces the speed of printing since colour printing devices usually take considerably longer to print.

According to the present invention therefore, there is provided a method and apparatus for splitting colour and monochrome pages automatically within a single document to print, respectively, to a colour or monochrome printing device depending on the respective colour content of each individual page within the document. This allows the advantage(s) (of either the speed, cost or other benefit) provided by two or more different types of printing device to be utilised effectively.

Thus the invention provides a method whereby, by spreading the printing process over more than one digital (electronic) printing devices, the cost and/or time to print may be reduced significantly.

The invention includes an apparatus for carrying out the method of the invention and apparatus including also a computer program capable of detecting the presence of data elements representing colour values in a print stream and causing the output stream for any page containing colour data to be directed to a first printer and causing the output stream for any page not containing colour data to be directed to a second printer. The computer program may be provided any suitable medium and may be retrospectively loaded into an existing computer system.

Components typically required for carrying out the process of the invention are:
1. 'Colour controller' software or hardware for driving the colour and monochrome copier or printing device;
2. A digital colour printer or copier, capable of being interfaced to the software; and
3. A digital black & white/monochrome (B&W) printer or copier, capable of being interfaced to the software.

The colour controller software component is normally responsible for converting an electronic document (submitted in some way by users to it) into a digital stream of data that can be accepted by the different printers. This data format may be quite different for the different types of printers. The process is normally known as 'RIP'ing (Raster Image Processing). Because digital printers are usually quite stringent about the speed at which they accept printing data (high speed or constant supply rate) some intermediate buffer (storage medium) is preferably used to save the print data stream after RIPing but before transmission to the printer. This buffer (the print buffer) may be present in either the colour controller component, or the printer itself. Even if such a print buffer was not present, the described invention would work as long as some means of 'cancelling' an individual print page was possible on the printer.

In a system according to the invention, when an electronic document is submitted to the colour controller, it will treat this document as if it was meant to be printed on both of the printers. While processing the document for the colour printer, it will keep track of colour information on a per-page basis. If colour elements (text, graphics or bitmapped images) are present in a given page, the page is submitted to the printer as normal. If colour elements are not present (the page is either blank, or contains black & white or shades of gray only on all its elements), then this page is not submitted for printing. This may be achieved by, for example, (i) removing any intermediate data from the print buffer, or (ii) not issuing a print page command to the printer in question. The reverse process is then undertaken for the black & white printer, i.e. the pages are printed if they contain black & white (or are blank, if there is a requirement to print blank pages) and are not printed if they contain colour information.

This multiple processing of the same document for both printers can either happen consecutively (the document is printed to each printer in turn) or simultaneously (processing happens at the same time for both printers, eg by the use of 'multi-tasking' or multiple hardware processors). The principle remains the same.

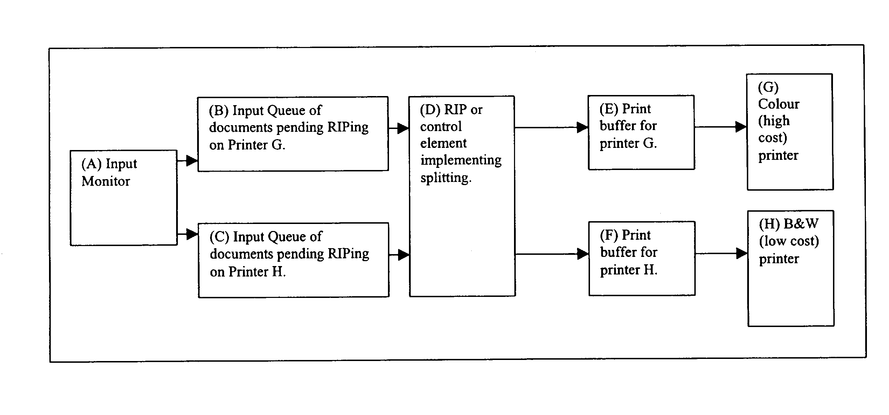

An example of an apparatus and method for carrying out the present invention will now be described with reference to the accompanying figure which represents a system for monitoring an electronic document sent for printing.

In the figure, which represents part of a computer system:
(A) represents an 'input monitor' or an element/component that users use to submit an electronic document for printing, from say a personal computer (not shown). The input monitor appears as a 'printer port' to a user of this system. It allows the user to print directly from any application software to this system;
(B) is an 'input' queue of documents awaiting processing by the colour printer (G);
(C) is an 'input' queue of documents awaiting processing by the monochrome printer (H);
(D) is the primary processing module responsible for the colour splitting;
(E) is an (optional) print buffer of pages already processed that have not yet been printed on the colour printer (G);
(F) is an (optional) print buffer of pages already processed that have not yet been printed on the monochrome printer (H);
(G) is the colour printer with a higher associated per-print cost; and
(H) is the monochrome or black & white printer with a lower associated per-print cost.

When a user prints to the above system, the print monitor (A) accepts the document and creates two copies of it, one for the input queue (C), and one for the input queue (B). The control element (D) then removes the copy of the document from the input queue(C) and starts processing it, submitting black & white pages to the print buffer (F) and discarding colour pages. Once this is completed, an electronic command is issued to the black & white printer (H) to print these pages. The RIP control component (D) then removes and processes the copy of the document from input queue (B), this time submitting colour pages to the print buffer (E) and discarding black & white pages. An electronic command is then issued to the colour printer (G) to print its share of the pages. Alternatively, these processes may take place in the opposite order, i.e. black & white pages being printed second. In practice, because of the different speeds of the printers printing may actually take place in either order or simultaneously.

In this example, the control element (D) is a software application running on a multitasking Operating System (Windows NT or Windows 98). It converts PostScript (a generic Page Description Language, or PDL) or other PDL information in which the user's document is submitted, into a raster, or pixel format. This conversion process generates a raster (or matrix of picture elements) in each of 4 colours: Cyan, Magenta, Yellow, Black. The software then decides if the page in question contains any colour information by scanning rasters for Cyan, Magenta, and Yellow. If non-zero values are found for any pixels in any of these rasters, then the page is treated as one containing colour and printing is directed to the colour printer buffer (E) for printing on the colour printer (G). If, however the rasters only contain zero values, then the page is considered to be black & white only. In this case the Black raster data only is printed to the black & white printer (H) via the print buffer (F). The printer buffers are optional and may comprise separate components or may be incorporated in the printer(s) or the computer system.

The software application (program) may be retrospectively downloaded to an existing computer system and may be carried on any conventional machine-readable medium or may be downloaded via a telecommunications network.

## Claims

1. A method for printing colour and monochrome pages in a document, by splitting colour and monochrome pages automatically and directing them to print, respectively, to a colour or monochrome printing device depending on the respective colour content of each individual page within the document.

2. A method according to claim 1, wherein the pages are split by a computer program arranged convert the pages of a document into a raster or pixel format and to scan the raster or pixels on each page to determine whether or not any page contains colour information.

3. An apparatus for printing colour and monochrome pages in a document, by splitting colour and monochrome pages automatically and directing them to print, respectively, to a colour or monochrome printing device depending on the respective colour content of each individual page within the document.

4. An apparatus according to claim 3, including a computer program arranged convert the pages of a document into a raster or pixel format and to scan the raster or pixels on each page to determine whether or not any page contains colour information.

5. An apparatus according to claim 4, further including a first input queue arranged to receive data representing colour pages; a second input queue arranged to receive data representing monochrome pages; a first print buffer; a second print buffer; and a control element for processing the document and arranged to (a) remove black & white pages and send colour pages to the first print buffer for colour printing and (b) remove colour pages and send black & white pages to the second print buffer for monochrome printing.

6. A computer system including apparatus according to claim 5.

7. A computer system according to claim 6, together with a colour printing device connected to the first print buffer and a monochrome printing device connected to the second print buffer.

8. A computer program arranged to convert the pages of a document into a raster or pixel format and having means for scanning the raster or pixels on each page to determine whether or not any page contains colour information, and, dependent on the determination direct the data representing the respective pages to a first or a second print buffer connected in use for printing.

9. A machine readable medium containing a computer program according to claim 8.
